**Europäisches Patentamt**

**European Patent Office**

**Office européen des brevets**

(19)

(11) Publication number : **0 391 300 B1**

(12)

# EUROPEAN PATENT SPECIFICATION

(45) Date of publication of patent specification :
18.08.93 Bulletin 93/33

(51) Int. Cl.⁵ : **B60C 11/00**

(21) Application number : **90106266.1**

(22) Date of filing : **02.04.90**

(54) Pneumatic tire.

(30) Priority : **07.04.89 JP 86868/89**

(43) Date of publication of application :
**10.10.90 Bulletin 90/41**

(45) Publication of the grant of the patent :
**18.08.93 Bulletin 93/33**

(84) Designated Contracting States :
**BE DE FR GB NL**

(56) References cited :
**EP-A- 0 321 730**
**US-A- 4 813 467**
**PATENT ABSTRACTS OF JAPAN, unexamined**
**applications, M field, vol. 8, no. 244, November**
**9, 1984, THE PATENT OFFICE JAPANESE**
**GOVERNMENT page 137 M 337**

(73) Proprietor : **THE YOKOHAMA RUBBER CO.,**
**LTD.**
**36-11, Shinbashi 5-chome Minato-ku**
**Tokyo, 105 (JP)**

(72) Inventor : **Toyohara, Kiyoshi**
**941-4 Kitakaname**
**Hiratsuka-shi, Kanagawa-ken (JP)**

(74) Representative : **Weber, Dieter, Dr. et al**
**Weber, Dieter, Dr., Seiffert, Klaus, Dipl.-Phys.,**
**Lieke, Winfried, Dr., Postfach 61 45,**
**Gustav-Freytag-Strasse 25**
**D-65051 Wiesbaden (DE)**

## Description

The present invention relates to a pneumatic tire improved in or relating to the removal of surface water in service on wet roads without its dry performance on dry roads being impaired.

Generally, it is regarded as an effective measure for improving the water removing characteristic of pneumatic tires in service on wet road surfaces to increase the volume of grooves on the tread surface of the tires. However, to increase the groove volume results in a reduction of the contact area of the tread, whereby the driving stability in service of tires on dry roads tends to be lowered to result in a lowering of the dry performance of the tires.

Pneumatic tires having a relatively limited aspect ratio (the ratio of the section height to the section width in a meridian section of the tires) have a relatively large footprint area or contact area of their tread, so that they are possessed of the characteristic of being able to exhibit a remarkable driving stability in service on dry roads. However, it is apparent that if an attempt is made to increase the volume of grooves in the tread surface as above in order to improve the water removal of tires having a relatively small aspect ratio, the relatively remarkable dry performance of the tires tends to be considerably lowered.

This tendency of the dry performance to become lowered is more likely with higher performance tires, particularly radial tires, which have an aspect ratio of 0.65 or below.

A known tire presenting the features of the preamble of claim 1 is shown, e.g. in US-A- 4 813 467.

It is a primary object of the present invention to provide a pneumatic tire improved in or relating to the water removing characteristic on wet roads without a sacrifice caused of the dry performance characteristics such as the driving stability on dry roads.

Another object of the invention is to provide a high performance pneumatic tire, particularly high performance pneumatic radial tire, having an aspect ratio of 0.65 or below, which is improved in or relating to the water removing characteristic on wet roads without its remarkable dry performance being adversely affected.

The pneumatic tire to attain the above objects according to the present invention has a footprint shape which the tread surface thereof prints on a flat road surface under static conditions in which the tire is inflated to the corresponding inflation pressure to a design normal load and applied with a load of 85 % of the design normal load, of which the contour of each of the front or toe end and the rear or heel end in the vicinity of the center of the contact width of the tread is relatively sharply convex respectively in the direction of from the rear end to the front end and in the direction of the front end to the rear end, of the footprint shape.

In greater detail, the pneumatic tire according to the invention comprises the features of claim 1.

By setting the contact shape of the tread surface or the footprint shape as above, a front or toe end portion of the tread surface can efficiently remove water on a wet road surface towards the left and the right sides of the tire and can exhibit a function to prevent the water entering succeeding portions of the tread surface when the tire is run, whereby the tire can demonstrate a remarkable water removing performance.

In or for the present invention, the above termed design normal load means the one prescribed by JATMA (Japan Automobile Tire Manufacturers Association). Also, the contact shape of the tread surface or the footprint shape of the tire means the one taken under static conditions in which the tire is inflated to the corresponding inflation pressure to the design nomal load prescribed by the JATMA and applied with a load of 85 % of the design normal load.

Fig. 1 is a plan view, showing the footprint shape printed by a pneumatic tire according to the present invention on a flat road surface, with an illustration of grooves of the tire omitted;

Fig. 2 is a perspective view, showing a pneumatic tire embodying the present invention:

Fig. 3 is a plan view, showing the footprint shape printed by a pneumatic tire according to the invention on a flat road surface, including an illustration of grooves;

Fig. 4 shows a plan view of the footprint shape of a conventional pneumatic tire; and

Fig. 5 shows a graphic view, taken for illustration of the relationship between the ratio, $\ell/L$, of the contact length $\ell$ in the tire circumferential direction, in the vicinity of each end of a maximum tire width, to the maximum contact length L in the tire circumferential direction, of or in a footprint shape, and the running velocity (index) at which the tire undergoes hydroplaning.

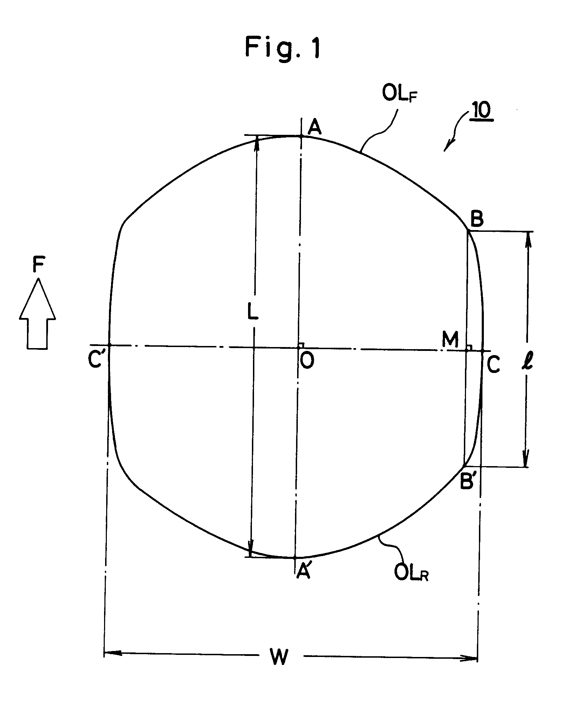

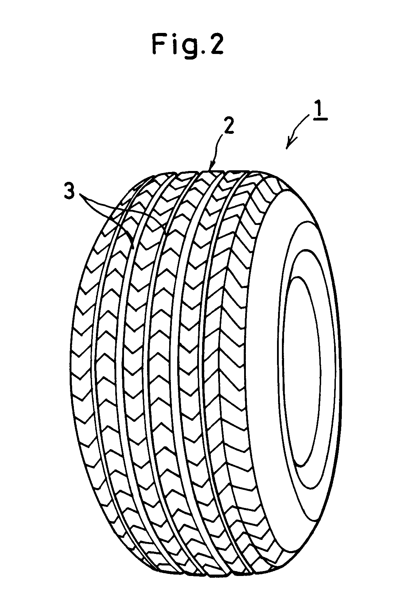

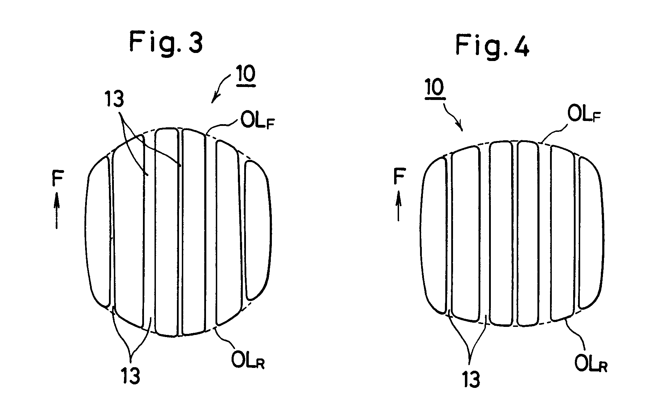

Fig. 1 shows an example of footprint shapes of pneumatic tires such as the one shown at 1 in Fig. 2 according to the present invention. To facilitate understanding, in the footprint shape generically indicated at 10 in Fig. 1, for example main grooves 3 provided in the circumferential direction on the tread surface 2 of the tire 1 are dropped, but in actuality, as shown in Fig. 3 the footprint shape 10 includes traces 13 corresponding to main grooves 3 of the tire 1.

As shown in Fig. 1, the contact shape 10 of the tread surface 2, or the footprint shape 10, printed by a tire according to the invention on a flat road surface has a contour $OL_F$ on the front or toe end side and a contour $OL_R$ on the rear or heel end side in the direction of advance F of a vehicle mounting the tire, which are convex in the direction of advance F and in the opposite direction respectively, in the vicinity of apeces A and A' on the center O of the maximum contact width of the footprint shape 10, and comprise a curved surface increasingly inclined towards each side end from each of the apeces A and A'.

In further detail, in the footprint shape 10 in Fig. 1, the contact length in the tire circumferential direction between the apeces A and A' on the center O of the maximum contact width W defined between points C and C' constitutes a maximum contact length L. Also, a contact length $\ell$ between points B and B' in the tire circumferential direction at a location M at a distance of 90 % of one half of the maximum contact width W (W/2) from the center O of the maximum contact width W, on each side of this center O, is set to be smaller than 0.65 of the maximum contact length L. That is to say, the ratio of $\ell$ to L, $\ell$/L, is set to be smaller than 0.65. Moreover, the contact length in the tire circumferential direction is varied so as to be greatest at the location of the maximum contact length L and gradually smaller therefrom up to the contact length $\ell$ at each side end. By the above arrangement or designing, the contour $OL_F$ on the toe end or front end and the contour $OL_R$ on the heel end or rear end of the footprint shape 10 form a relatively rapid or sharp curved face on each side of each of the apeces A and A'.

Generally in conventional tires, the footprint shape 10 closely resembles a rectangle as shown in Fig. 4, so that the above described ratio $\ell$/L is on the order of 0.8 to 0.9. Because of this, the toe end contour $OL_F$ and the heel end contour $OL_R$ of the footprint shape 10 form more moderate curves in comparison with those of the footprint shape 10 of tires according to the present invention.

As stated above, the toe end and the heel end contours $OL_F$ and $OL_R$ of the footprint shape 10 of tires according to the invention are more sharply convex in comparison with those of conventional tires, so that when compared with conventional tires, the tires according to the invention can more efficiently remove water in their service on wet road surfaces towards the left and the right sides along the front or toe end counter $OL_F$. Accordingly, it is possible pursuant to the present invention to effectively suppress the tendency of water to enter the tread surface of the tire and improve the water removing performance of the tire.

According to the present invention, such effect of removal of surface water can be exhibited regardless of a change in the groove area on the tread surface, so that it is possible to provide on the tread surface such a tread area and/or a groove pattern which can permit the dry performance of the tire to be fully exhibited. Thus, even it is possible to attain a further improvement in or relating to the dry performance of tires.

The above described effects/results according to the present invention are extremely effective in the cases of such pneumatic tires or, more particularly, such pneumatic radial tires which have an aspect ratio of 0.65 or below and of which a high dry performance and a satisfactory water removing performance are hardly compatible.

Pneumatic tires having the above described contact shape of the tread surface or the footprint shape according to the present invention can be produced with ease if it is devised as follows: Namely, it is proposed to relatively suppress the radius of the tread forming surface of the tire forming mold in comparison with that of the conventional tire forming molds, to relatively limit the developed width of the tread, to relatively increase the width of a reinforcing belt to be provided in the tread portion, and to set the thickness of the tread rubber to be smaller in a tire shoulder region than in a tread center region, and the above proposed measures may be adopted either singly or in combination of any two or more.

Examples:

There were produced seven different pneumatic tires, which commonly had a tire size of 195/65R15, an aspect ratio of 0.65 and a tread pattern or a groove arrangement as shown in Fig. 2 but had different values as shown in the below table, for the maximum contact length L in the tire circumferential direction on the center of the maximum contact width and also for the contact length $\ell$ in the tire circumferential direction at each side end, measured on the basis of the footprint shape or the contact shape of the tread surface. Further, each of the tires had a highly remarkable driving stability on dry roads.

| L (mm) | 172 | 148 | 144 | 140 | 140 | 138 |
|---|---|---|---|---|---|---|
| $\ell$ (mm) | 103 | 104 | 115 | 126 | 140 | 151 |
| $\ell$/L | 0.6 | 0.7 | 0.8 | 0.9 | 1.0 | 1.1 |

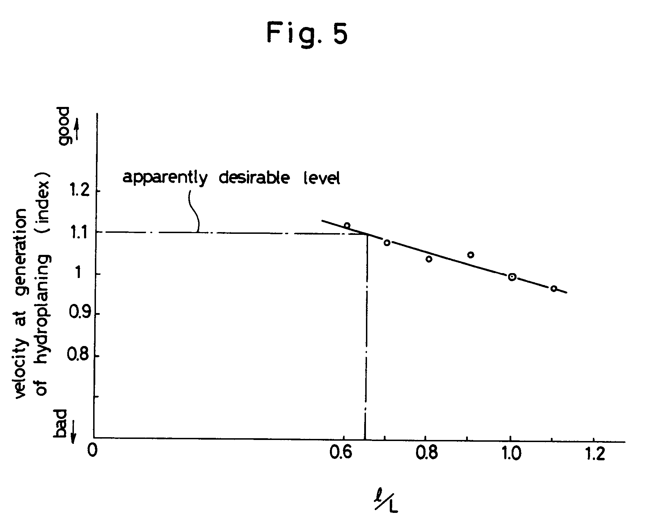

Each of the above tires was inflated at an inflation pressure of 1.9 kgf/cm², four of respective tires were mounted on a passenger car under a load of 430 kg per tire, and while the passenger car was run at the third gear, the velocity at which hydroplaning took place was measured under the below described conditions, to evaluate the water removing performance. Results of the evaluation were as shown in Fig. 5.

Velocity at generation of hydroplaning

With the running velocity gradually raised, the above passenger car was run straight on a wet road having a water layer depth of 8 to 9 mm on the surface thereof, and the running velocity at which the tires underwent idling and the engine rotation number rose abruptly was determined and taken as the velocity at which hydroplaning took place.

In Fig. 5, the velocity at which the tire having the $\ell/L$ ratio of 1 underwent hydroplaning is taken as reference and shown as 1, and the velocity at which respective other tires underwent hydroplaning is shown by an index.

From Fig. 5, it is seen that in connection with each of the tires having an $\ell/L$ ratio of 0.70 or above, the index of the valocity at which hydroplaning took place does not reach an apparently desirable level of 1.1 and that such tires have a poor water removing performance.

As described in detail above, in or with the tires according to the present invention, the front or toe end countour of the footprint shape can effectively remove water in service of the tires on wet road surfaces towards the left and the right sides regardless of the area of grooves on the tread surface and hardly permits the water to enter the tread surface. Thus, pursuant to the present invention, it is possible to improve the water removing characteristic on wet road surfaces, namely the wet performance of tires without impairing the dry performance such as the driving stability on dry roads of the tires.

## Claims

1.  A pneumatic tire having a footprint shape which the tread surface of the tire prints on a flat road surface under static conditions, which tire is inflated to an inflation pressure corresponding to a design normal load, said footprint shape having a maximum contact length L in the circumferential direction of the tire on the center (O) with respect to the maximum contact width (W) , said footprint shape having a front or toe end contour and a rear or heel end contour comprising a curve gradually reducing the contact length in the tire circumferential direction towards each side end from the region of the maximum contact length L, **characterized in that,** when the tire is applied with a load of 85% of the design normal load, the contact length I in the tire circumferential direction at a location at a distance of 90 % of one half of the maximum contact width (W) from the center (O) of the maximum contact width (W), on each side of this center (O), is such that the ratio of this contact length I to the maximum contact length L is smaller than 0,65.

2.  A pneumatic tire as claimed in claim 1, which has an aspect ratio of 0,65 or below.

3.  A pneumatic tire as claimed in claim 1, which is designed as a pneumatic radial tire.

## Patentansprüche

1.  Druckluftreifen mit einer Aufstandsflächenform, welche die Lauffläche des Reifens auf einer ebenen Straßenfläche unter statischen Bedingungen als "Fuß"-Abdruck bildet, wobei der Reifen auf einen Druck aufgepumpt ist, der der normalen Auslegungslast entspricht, wobei die Aufstandsflächenform eine maximale Kontaktlänge (L) in Umfangsrichtung des Reifens im Zentrum bezüglich der maximalen Kontaktbreite (W) hat, die Aufstandsflächenform eine vordere oder "Zehen"-Endkontur und eine hintere oder "Hacken"-Endkontur hat, welche eine Krümmung aufweist, welche die Kontaktlänge in Umfangsrichtung des Reifens zu jeder Seite hin von der Stelle der maximalen Kontaktlänge (L) aus allmählich reduziert, dadurch gekennzeichnet, daß dann, wenn auf den Reifen eine Belastung aufgebracht ist, die 85 % der normalen Auslegungslast entspricht, die Kontaktlänge (I) in Umfangsrichtung des Reifens an einer Stelle, die einem Abstand von 90 % der halben maximalen Kontaktbreite (W) vom Zentrum der maximalen Kontaktbreite (W) entspricht, auf jeder Seite dieses Zentrums (O) derart ist, daß das Verhältnis dieser Kontaktlänge (I) zu der maximalen Kontaktlänge (L) kleiner als 0,65 ist.

2.  Druckluftreifen nach Anspruch 1, dadurch gekennzeichnet, daß er ein Aspekterhältnis (Querschnittsverhältnis) von 0,65 oder weniger hat.

3. Druckluftreifen nach Anspruch 1, dadurch gekennzeichnet, daß er als Druckluftradialreifen ausgebildet ist.

## Revendications

1. Bandage pneumatique possédant une forme d'empreinte, dont la surface de bande de roulement du bandage imprime ou s'applique sur une surface de route plane dans des conditions statiques, ce bandage étant gonflé à une pression de gonflage correspondant à une charge normale prévue, cette forme d'empreinte ayant une longueur de contact maximum (L) suivant la direction de la circonférence du bandage sur le centre (O) par rapport à la largeur maximum de contact (W), cette forme d'empreinte possédant un contour d'extrémité avant ou d'embout ainsi qu'un contour d'extrémité arrière ou de talon avec une courbe qui diminue graduellement la longueur de contact suivant la direction de circonférence du bandage à l'encontre de chaque extrémité latérale depuis l'emplacement de la longueur de contact maximum (L), caractérisé en ce que, lorsque le bandage est soumis à une charge de 85% de ladite charge normale prévue, la longueur de contact ($\ell$) suivant la direction de la circonférence du bandage à un emplacement à une distance de 90% de la moitié de la largeur maximum de contact (W) depuis le centre (O) de la largeur maximum de contact (W) sur chaque côté de ce centre (O), est telle que le rapport de cette longueur de contact ($\ell$) sur la longueur de contact maximum (L) est inférieur à 0,65.

2. Bandage pneumatique selon la revendication 1, dans lequel un rapport d'aspect est égal à 0,65 ou moins.

3. Bandage pneumatique selon la revendication 1, dont la structure est celle d'un bandage pneumatique radial.

Fig. 1

# Fig.2

EP 0 391 300 B1

Fig. 3

Fig. 4

8

## Fig. 5